# EUROPEAN PATENT SPECIFICATION

(11) **EP 1 898 728 B1**
(45) Date of publication and mention of the grant of the patent: **23.02.2011**
(21) Application number: 06747603.6
(22) Date of filing: 27.06.2006
(51) Int. Cl.: A23L 3/3418

(54) **METHOD AND DEVICE FOR SUBJECTING A FOOD PRODUCT TO A HEAT TREATMENT**
VERFAHREN UND GERÄT FÜR DIE DURCHFÜHRUNG EINER HITZEBEHANDLUNG MIT EINEM NAHRUNGSMITTELPRODUKT
PROCEDE ET DISPOSITIF PERMETTANT DE SOUMETTRE UN PRODUIT ALIMENTAIRE A UN TRAITEMENT THERMIQUE

(30) Priority: 28.06.2005 NL 1029353
(43) Date of publication of application: 19.03.2008
(73) Proprietor: Greencore Convenience Foods Liessel B.V., 5757 PZ Liessel (NL)
(72) Inventor: HÜSKEN, Johannes Patrick, NL-6663 GD Lent (NL); VISSER, Wiebe, NL-4132 VD Vianen (NL)
(74) Representative: Brouwer, Hendrik Rogier
(86) International application number: PCT/NL2006/050151
(87) International publication number: WO 2007/001182

(56) References cited:
- EP-A- 0 968 920
- US-A- 3 437 495
- US-B1- 6 437 305

## Description

The invention relates to a method and device for subjecting a packaged food product to a heat treatment, such as pasteurization, whereby the product is brought up to the treatment temperature by radiating it with microwaves and then cooling it down.

Treating a food product with heat to increase its storage life inter alia, is applied on a large scale. A known method in this respect is for example pasteurization, whereby the food product is heated to a temperature of at least approximately 72°C, and preferably at least 100°C for a suitable period of time. Such a heat treatment is applied inter alia to ready-made food products (such as boiled and/or baked products for example), after they have been placed in their final package, to be able to offer an optimal guarantee against contamination of the food products that could have occurred during operations undergone by the food products after completion of the first heat treatment. However, products that have not been pretreated with heat can also be conditioned with a heat treatment. To further improve the bactericidal effect of the heat treatment, while preventing the quality of the food product from deteriorating, it is currently usual to subject the food product to high frequency radiation (microwaves) for a relatively short period of time. With such a method, the food product enclosed in its package is intensely heated for a short period of time, whereby at least a large part of the undesired micro-organisms in the food are killed. Because the atmosphere prevailing in the package is also intensely heated, this can cause the pressure in a closed package to rise sharply.

EP-A-0 968 920 describes a method for subjecting a packaged pre-cooked food product to a heat treatment, i.e. pasteurisation. In the disclosed method, the product is placed in an open package, heated by microwaves and then rapidly cooled down in sterile air, whereafter the package is sealed.

US-A-3 437 495 discloses a method for aseptic canning of foods, the method comprising disposing the product in a sterilized environment, exposing the product simultaneously to pressure above atmospheric pressure while subjecting the product to a heat treatment. The sterilized product is canned (sealed) after cooling has been achieved.

US-B1-6 437 305 describes a method for the cooking and vacuum packing of mussels by using microwaves. In the disclosed method, a vacuum in the container for the mussels is achieved by cooling the container in a closed state.

Although the known method has a favorable effect per se on the storage life of the packaged food product, there is a need for further improvement. In view of the sharp increase in demand, which is still continuing to rise, for prepackaged meals for example, it is very attractive for suppliers of such prepackaged meals if the storage life thereof can be extended. Extended storage life simplifies the logistics of the products and reduces losses as a result of products that have expired.

The object of the present invention is to provide a method and device for subjecting a packaged food product to a heat treatment, enabling the storage life of packaged food products to be extended.

The method according to the invention is thereto characterized in that the cooling process takes place in a conditioned gas environment, and in that an opening is applied to the package before and/or while the packaged food product is being subjected to the heat treatment, such that it comprises an opening during the cooling process, through which opening the conditioned gas is drawn into the package.

After being radiated with microwaves, the packaged food product reaches at least the desired treatment temperature. If the temperature in the package rises to almost boiling temperature, a part of the water in the foodstuff present in the package will boil and form water vapor. Because water vapor is formed, the volume of gas in the package increases, in turn causing the pressure to increase. Gas will disappear from the package via the opening in the package. Because water vapor continues to form during the heating process, the fraction of atmospheric gases in the package will decrease. The atmospheric gases are so to speak flushed out of the package. During the subsequent cooling process, the atmosphere prevailing in the package will also cool down, causing the pressure in the package to reduce, as a result of which it can become lower than the ambient pressure. If the cooling process is now allowed to take place in a conditioned gas environment and a connection is ensured between the environment inside the package and the conditioned gas environment by means of the opening in the package, the atmosphere prevailing in the package will be supplemented with the conditioned gas during the cooling process. This conditioned gas is drawn in through the opening in the package. By making a suitable choice of conditioned gas, the desired storage atmosphere in the package can be influenced in this simple way.

To ensure this storage atmosphere in the package for longer periods of time as well, it is preferable to seal the opening after at least a part of the cooling stage of the process, preferably to hermetically seal it. It is thus possible for example to seal the opening by affixing a sticker, on which for example further product information can be incorporated or by sealing the opening(s) in the package in another way. A further advantage of the present invention is provided in that by determining the point at which the package is sealed, it is also possible to determine the resultant end pressure in the sealed package once it has been fully recooled to a storage temperature. In this way, the form of the package at storage temperature can also be influenced.

The method according to the invention is preferably characterized in that the oxygen content in the conditioned gas environment amounts to less than 20 vol.-%. The oxygen content in the conditioned gas environment is more preferably less than 2 vol.-%, and even more preferably less than 0.5 vol.-%.

Although in principle any conditioned gas suitable for a desired object can be selected, it is advantageous to select a substantially inert gas for this object. Therefore, in this embodiment of the method according to the invention, the conditioned gas environment at least partially comprises an inert gas. It turns out that by lowering the concentration of oxygen present in the package as a result of feeding for example an inert gas during the cooling process, the storage life of the packaged food product surprisingly increases. An inert gas that is particularly advantageous to use in the method according to the invention is nitrogen gas. Because nitrogen gas is generally fed in a highly cooled, liquid state, this has an additional advantage in that the food product can also be cooled by means of the nitrogen gas. This not only benefits the speed of the method, but also leads to an increase in the quality of the food product. The quality of the food is indeed enhanced by reverting the temperature to for example a storage temperature of 7°C or lower as quickly as possible after the heat treatment.

According to the invention, the package must be provided with an opening, at least for a part of the cooling stage of the process before and/or while the packaged food product is being subjected to the heat treatment. In this respect, it does not matter where and when the package is provided with the opening. It is thus for example possible to apply the opening in the package during the process of radiating with microwaves. It is also possible to apply the opening at the beginning of the method, before the product is brought up to the treatment temperature, for example while applying a covering film on a container. However, it is best to apply the opening prior to the heating process and preferably not during the radiation and/or cooling process, otherwise there would be a risk of the pressure in the package reaching too high a level, which in turn would distort the package or even crack it.

As already described above, the pressure in the package sharply increases when it is brought up to treatment temperature. Because it can be difficult to adjust the ambient pressure hereto during the heat treatment, this increased internal pressure can give rise to an undesired distortion of the package, whereby this can even lead to the package cracking and possibly even losing the entire food product. This is obviously highly undesirable, also because such an incident could bring production to a standstill. The present preferred method has the additional advantage in that, due to the presence of the opening in the package, the pressure in the package when it is brought up to treatment temperature does not increase at all or only increases slightly or to the extent that the package does not undergo any undesired distortion. The extent to which the package distorts depends inter alia on the properties of the package material, the design of the package, the form of the food product, how high the treatment temperature is and the extent to which the opening enables gasses to pass through. By making a suitable choice of opening, the difference in pressure between inside the package and the environment can be regulated using the method according to the invention. This is for example very important with packages constructed out of a shell-shaped container, provided with a covering film. In such a package, the covering film is generally connected to the circumference of the container in a peelable fashion, such that it seals the container along the circumference. Such a film must preferably have properties such that it can be peeled away from the circumference relatively easily (referred to as "easy peel"). With known devices for treating food products with heat, the build-up of pressure in the package during the heating process can possibly cause such a film to come away from the circumference. The method according to the invention also resolves this problem.

If, in an embodiment of the method, the package is already provided with an opening before it is heated, it is also achieved that oxygen present in the package is at least already partially removed from the package, in turn benefiting the storage life of the food product. It is therefore usual for water vapor to form inside the package as a result of the heating process. By now providing the opening in the package during the heating process, the oxygen can be dispelled inter alia by the water vapor thus formed.

The opening can in principle be designed in any way available to the person skilled in the art. With the type of package plus film described above, it is thus possible for example to provide an opening in the film and/or container, if desired with a reinforced edge. It is also possible to design the opening as a valve, if desired as a pressure-relief valve. It should be noted that more than one embodiment is possible for the opening, which all fall within the scope of the inventive concept of the present invention.

The method according to the invention can be effectively performed if the food products to be treated are placed in batches in a treatment device suitable for the method. Such a method is also referred to as batch processing. However, it is advantageous under certain circumstances with a view to achieving a large treatment capacity, to perform the method in a continuous fashion in a treatment device suitable for this purpose. The invention therefore also relates to a device for subjecting a packaged food product to a heat treatment, such as pasteurization. The device according to the invention comprises at least one heat treatment area and a cooling area linked thereto, whereby the device also comprises conveying means in order to move the food product to be treated, and whereby the cooling area at least is provided with means for feeding a conditioned gas.

Suitable conveying means are for example one or more conveyor belts that are possibly interlinked. Such a conveyor belt can for example be driven by a number of pulleys. It is however also possible to apply other conveying means, such as vehicles with or without a driver, to convey the food product from one part of the device to another part. It should be noted that the person skilled in the art has various options available in this respect, from which to make a suitable choice.

The heat treatment area of the device according to the invention comprises means known per se to heat the food product to be treated. To this end, it is also possible for example to provide means for introducing heated air or steam, if desired under pressure. However, the heat treatment area of the device is preferably provided with at least one electromagnetic radiation-generating device. In the event of there being more than one such device, they can be arranged in any suitable position in the heat treatment area, but they are preferably arranged in a regular pattern, if desired in the longitudinal direction of the area - this is the direction in which the food products to be treated will pass through - for example on the upper surface of the area. Radiation devices are preferably used that can emit a high-frequency wave (a microwave). If desired, the heat treatment area can be provided with a number of separate compartments having individual temperature control.

The cooling area of the device is provided with means for feeding and possibly also discharging a conditioned gas. This makes it possible to adjust the composition of the conditioned gas environment, preferably the oxygen content thereof. If desired, the cooling area is also provided with means to be able to measure and/or regulate the oxygen content in the cooling area. It is advantageous to ensure that the conditioned gas moves through the device substantially in one direction of flow, whereby this direction of flow is preferably opposed to the direction in which the packaged food products pass through. In such a preferred embodiment, the conditioned gas is fed inside at the rear end of the device, flushes along the packaged food products to the front end of the device and leaves the device at the point at which the products are fed in. Because the device is preferably also almost air-tight, and it is therefore almost impossible for any leakage of atmospheric gases to take place in the device, the oxygen possibly forced in at the front end and the oxygen displaced from the packages via boiling are thus conveyed together by the conditioned gas toward the front end of the installation. In this way it is possible to ensure that the average oxygen content at the rear end of the device is low, which is desirable.

The device is preferably provided with means for feeding liquid nitrogen and/or carbon dioxide. To this end, the cooling area is for example provided with nozzles (metering heads) etcetera, said nozzles being attached to a supply of liquid nitrogen. The pressure and purity of the supplied nitrogen can if desired be regulated by providing means known per se that are suitable for the purpose. The nozzles for the conditioned gas can also be arranged in any position in the cooling area that is suitable for this purpose. However, they are preferably arranged in the longitudinal direction of the area in a regular pattern, for example on the upper surface of the area. It is however also possible to feed the conditioned gas into the area via for example nozzles arranged in the corners. If desired, the cooling area can be provided with a number of separate compartments having individual temperature and/or conditioned gas control.

The device according to the invention also comprises means for applying an opening in the package. Such means are at least arranged in and/or in front of the heat treatment area. It is also possible not to include such means. In this case, for the device to function properly, it is necessary to provide the package containing the food product to be treated with an opening beforehand. This can for example be done by not completely sealing the edge when applying the closing film, but leaving small openings allowing gas to escape during the heating process and to come back in again during the cooling process. The openings are then sealed tight after the cooling process. In another embodiment, the package is provided with at least one valve, through which gas can escape if there is overpressure and be drawn inside if there is underpressure. The package is then closed if the difference in pressure is slight. This is additionally advantageous in that the food products can be delivered to the device in a substantially fully closed package, thus continuing to restrict (bacterial) contamination in the preliminary stage.

According to yet another embodiment of the device, at least the cooling area is provided with means for sealing the opening. Such means are known to the person skilled in the art and comprise for example a device for affixing stickers and/or other sealing means. Using this preferred embodiment, it is possible to perform the entire heat treatment process in almost a completely 'closed' fashion, whereby the product is fed into the device packaged and exits the device packaged. This significantly reduces the chance of bacteriological and other types of contamination, which also benefits the storage life of the treated food product.

It should be noted that if desired the device is also provided with other means that can benefit the functioning thereof. It is thus possible for example to provide the device with several interconnected heat treatment and cooling areas. It is also possible to provide pressure locks between the various areas, making it possible to individually regulate the pressure in the relevant areas. The device can also comprise vent holes and/or spray devices for a cooling medium for the purpose of cooling.

Further features of the invention will emerge from the non-restrictive embodiment of a device and method according to the invention shown in the following figure, without being limited thereto. The following are shown:

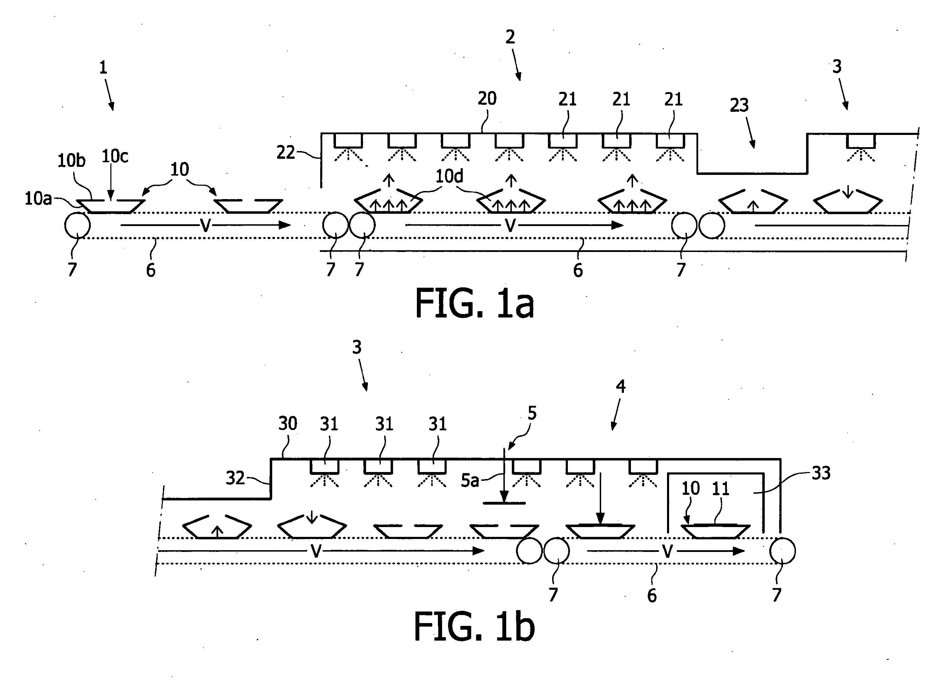

Figure 1a shows a schematic cross-section in a longitudinal direction of a first part of a preferred embodiment of the device according to the invention; and
Figure 1b shows a schematic cross-section in a longitudinal direction of a second part of the preferred embodiment of the device.

The device comprises a feeder part 1, a heat treatment area 2, and a cooling area 3, of which a part 4 is provided with sealing means 5. The packaged food products 10 to be treated are conveyed through the device by means of substantially interconnected conveyor belt parts 6 that are driven via pulleys 7. The packaged food products 10 are in the form of a shell-shaped container 10a that is provided with a covering film 10b, of the type that can be peeled off the container 10a. The covering film 10b is provided with an opening 10c. The heat treatment area 2 arranged downstream of the feeder part 1 in direction of travel V comprises a number of microwave radiators 21 arranged one after the other on the upper surface 20 of the area. Treatment area 2 is at least partially sealed from the surrounding environment by housing 22. The cooling area 3 is reached via a transition zone 23 that is preferably low in height. This comprises a number of inlets 31 arranged on the upper surface 30 one after the other, to feed liquid nitrogen under pressure. Cooling area 3 is at least partially sealed off from the surrounding environment by housing 32. A part 4 of cooling area 3 is provided with means 5 for affixing stickers onto the package of treated food products 10. Sealing means 5 comprise a pressure rod 5a on the tip of which is attached a dispenser for stickers. The pressure rod 5a is connected to driving means (not shown in the figure) that can move the pressure rod 5a up and down in an almost vertical direction. An aperture 33 is provided downstream of the cooling area to remove the treated products 10 from the conveyor belt 6.

Products to be treated 10 are placed on the conveyor belt 6 in the feeder part 1 shown in the left-hand side of the figure. The film 10b of the packages 10 therefore takes up a relatively flat position. Once the packages with the product 10 to be treated enter the heat treatment area 2, the insides 10d of the packages expand through the action of the radiation emitted by the microwave radiators 21, in turn causing the film 10b to be pushed up. Because the film is provided with an opening 10c, the thermal expansion of the inside volume 10d does not lead to the film 10b and/or container 10a breaking. By heating the products while they are passing through the heat treatment area 2, water vapor forms in the inside space 10d. The opening 10c ensures that oxygen previously present in the inside space 10d will be at least partially expelled. After passing through the heat treatment area 2, the packaged food product 10 enters the cooling area. By using liquid nitrogen as a conditioned gas, the packaged food product 10 will already be substantially cooled after covering a short distance in the cooling area 3. This rapid cooling ensures a reduction in the inside volume 10d and pressure drop therein. As a result of this, nitrogen is drawn away from the cooling area toward the inside 10d of the package 10. This also leads to the film 10b again taking up a more or less flat position, as shown in the figure. The atmosphere present in the inside space 10d is therefore largely replaced by an atmosphere that is to a large extent inert, in other words an atmosphere containing a high level of nitrogen. In the second part 4 of the cooling area 3, the food product 10 treated in this way is then provided with a seal in the form of a sticker 11.

## Claims

1. Method for subjecting a packaged food product to a heat treatment, such as pasteurization, whereby the product is brought up to the treatment temperature by radiating it with microwaves and then cooling it down, whereby the cooling process takes place in a conditioned gas environment and whereby an opening is applied to the package before and/or while the packaged food product is being subjected to the heat treatment, such that it comprises an opening during the cooling process, through which opening the conditioned gas is drawn into the package.

2. Method according to claim 1, **characterized in that** the opening in the package is sealed after at least a part of the cooling stage of the process.

3. Method according to claim 1 or 2, **characterized in that** the oxygen content in the conditioned gas environment amounts to less than 20 vol.-%.

4. Method according to claim 3, **characterized in that** the oxygen content in the conditioned gas environment amounts to less than 2 vol.-%.

5. Method according to any one of the preceding claims, **characterized in that** the conditioned gas environment substantially comprises an inert gas.

6. Method according to any one of the preceding claims, **characterized in that** the conditioned gas environment substantially comprises nitrogen.

7. Method according to any one of the preceding claims, **characterized in that** the conditioned gas environment substantially comprises carbon dioxide.

8. Method according to any one of the preceding claims, **characterized in that** the conditioned gas environment comprises a mixture of nitrogen and carbon dioxide.

9. Method according to any one of the preceding claims, **characterized in that** the package comprises a shell-shaped container with covering film, said covering film being connected in a peelable fashion to the circumference of the container, whereby the covering film is provided with the opening.

10. Device for subjecting a packaged food product to a heat treatment, such as pasteurization, said device comprising at least one heat treatment area and a cooling area linked thereto, whereby the device also comprises conveying means in order to move the food product to be treated, whereby at least the cooling area is provided with means for feeding a conditioned gas, and whereby the device is provided with means for applying an opening in the package, which means are at least arranged in and/or in front of the heat treatment area.

11. Device according to claim 10, **characterized in that** the cooling area is provided with means for feeding liquid nitrogen and/or carbon dioxide.

12. Device according to claim 10 or 11, **characterized in that** at least the heat treatment area is provided with means for applying an opening in the package.

13. Device according to any one of claims 10 to 12, **characterized in that** at least the cooling area is provided with means for sealing the opening.

## Patentansprüche

1. Verfahren, um ein verpacktes Nahrungsmittelprodukt einer Wärmebehandlung, z.B. einer Pasteurisation, auszusetzen, wodurch das Produkt durch Bestrahlung mit Mikrowellen auf die Behandlungstemperatur erhitzt und anschließend abgekühlt wird, wobei der Kühlprozess in einer konditionierten Gasumgebung stattfindet und wobei auf der Verpackung eine Öffnung angebracht ist, bevor und/oder während das verpackte Lebensmittelprodukt der Wärmebehandlung ausgesetzt wird, so dass die Verpackung während des Kühlprozesses eine Öffnung umfasst, durch die das konditionierte Gas in die Packung gesaugt wird.

2. Verfahren gemäß Anspruch 1, **dadurch** charakterisiert, dass die Öffnung in der Verpackung mindestens nach einem Teil der Kühlphase im Prozess versiegelt wird.

3. Verfahren gemäß Anspruch 1 oder 2, **dadurch** charakterisiert, dass der Sauerstoffgehalt in der konditionierten Gasumgebung weniger als 20 Volumenprozent beträgt.

4. Verfahren gemäß Anspruch 3, **dadurch** charakterisiert, dass der Sauerstoffgehalt in der konditionierten Gasumgebung weniger als 2 Volumenprozent beträgt.

5. Verfahren gemäß jedem der obigen Ansprüche, **dadurch** charakterisiert, dass die konditionierte Gasumgebung im Wesentlichen ein Edelgas enthält.

6. Verfahren gemäß jedem der obigen Ansprüche, **dadurch** charakterisiert, dass die konditionierte Gasumgebung im Wesentlichen Stickstoff enthält.

7. Verfahren gemäß jedem der obigen Ansprüche, **dadurch** charakterisiert, dass die konditionierte Gasumgebung im Wesentlichen Kohlendioxid enthält.

8. Verfahren gemäß jedem der obigen Ansprüche, **dadurch** charakterisiert, dass die konditionierte Gasumgebung ein Gemisch aus Stickstoff und Kohlendioxid enthält.

9. Verfahren gemäß jedem der obigen Ansprüche, **dadurch** charakterisiert, dass die Verpackung einen muschelförmigen Behälter mit einer Deckfolie umfasst, wobei die genannte Deckfolie abziehbar auf der Außenseite des Behälters angebracht ist und wobei die Deckfolie mit der Öffnung versehen ist.

10. Gerät, um ein verpacktes Nahrungsmittelprodukt einer Wärmebehandlung, z.B. einer Pasteurisation, auszusetzen, wobei das genannte Gerät mindestens einen Wärmebehandlungsbereich und einen damit verknüpften Kühlungsbereich umfasst, wobei das Gerät außerdem eine Fördereinrichtung umfasst, um das zu behandelnde Nahrungsmittelprodukt zu befördern, wobei mindestens der Kühlungsbereich mit einem Mittel versehen ist, um ein konditioniertes Gas zuzuführen und wobei das Gerät mit einem Mittel zum Anbringen einer Öffnung in der Verpackung versehen ist, wobei dieses Mittel mindestens im und/oder vor dem Wärmebehandlungsbereich angeordnet ist.

11. Gerät gemäß Anspruch 10, **dadurch** charakterisiert, dass der Kühlungsbereich mit einem Mittel zur Zufuhr von flüssigem Stickstoff und/oder Kohlendioxid versehen ist.

12. Gerät gemäß Anspruch 10 oder 11, **dadurch** charakterisiert, dass mindestens der Wärmebehandlungsbereich mit einem Mittel zum Anbringen einer Öffnung in der Verpackung versehen ist.

13. Gerät gemäß einem der Ansprüche 10 bis 12, **dadurch** charakterisiert, dass mindestens der Kühlungsbereich mit einem Mittel zur Versiegelung der Öffnung versehen ist.

## Revendications

1. Procédé pour soumettre un produit alimentaire emballé à un traitement thermique, tel qu'une pasteurisation, le produit étant porté à la température de traitement en l'irradiant avec des micro-ondes et puis, en le refroidissant, le processus de refroidissement ayant lieu dans un environnement gazeux conditionné et une ouverture étant ménagée dans l'emballage avant et/ou pendant que le produit alimentaire emballé est soumis au traitement thermique, de telle sorte qu'il comporte une ouverture pendant le processus de refroidissement, ouverture par laquelle le gaz conditionné est aspiré dans l'emballage.

2. Procédé selon la revendication 1, **caractérisé en ce que** l'ouverture dans l'emballage est scellée après au moins une partie de l'étape de refroidissement du processus.

3. Procédé selon la revendication 1 ou 2, **caractérisé en ce que** la teneur en oxygène de l'environnement gazeux conditionné se monte à moins de 20 % en volume.

4. Procédé selon la revendication 3, **caractérisé en ce que** la teneur en oxygène de l'environnement gazeux conditionné se monte à moins de 2 % en volume.

5. Procédé selon l'une quelconque des revendications précédentes, **caractérisé en ce que** l'environnement gazeux conditionné comprend essentiellement un gaz inerte.

6. Procédé selon l'une quelconque des revendications précédentes, **caractérisé en ce que** l'environnement gazeux conditionné comprend essentiellement de l'azote.

7. Procédé selon l'une quelconque des revendications précédentes, **caractérisé en ce que** l'environnement gazeux conditionné comprend essentiellement du dioxyde de carbone.

8. Procédé selon l'une quelconque des revendications précédentes, **caractérisé en ce que** l'environnement gazeux conditionné comprend un mélange d'azote et de dioxyde de carbone.

9. Procédé selon l'une quelconque des revendications précédentes, **caractérisé en ce que** l'emballage comprend un conteneur en forme de coquille avec film couvrant, ledit film couvrant étant attaché de manière détachable à la circonférence du conteneur, le film couvrant étant pourvu d'une ouverture.

10. Dispositif pour soumettre un produit alimentaire emballé à un traitement thermique, telle qu'une pasteurisation, ledit dispositif comprenant au moins une zone de traitement thermique et une zone de refroidissement y reliée, le dispositif comprenant aussi des moyens de transport afin de déplacer le produit alimentaire à traiter, au moins la zone de refroidissement étant pourvue de moyens pour injecter un gaz conditionné et le dispositif étant pourvu de moyens pour ménager une ouverture dans l'emballage, lesquels moyens sont au moins agencés dans et/ou devant la zone de traitement thermique.

11. Dispositif selon la revendication 10, **caractérisé en ce que** la zone de refroidissement est pourvue de moyens pour injecter de l'azote et/ou du dioxyde de carbone liquide.

12. Dispositif selon la revendication 10 ou 11, **caractérisé en ce qu'**au moins la zone de traitement thermique est pourvue de moyens pour ménager une ouverture dans l'emballage.

13. Dispositif selon l'une quelconque des revendications 10 à 12, **caractérisé en ce qu'**au moins la zone de refroidissement est pourvue de moyens pour sceller l'ouverture.
